# EUROPEAN PATENT SPECIFICATION

(11) **EP 2 711 073 B1**
(45) Date of publication and mention of the grant of the patent: **21.11.2018**
(21) Application number: 12185707.2
(22) Date of filing: 24.09.2012
(51) Int. Cl.: B01J 3/04, F16J 12/00

(54) **Storage and transportation of a catalyst for a production of olefin polymers**
Speicher und Transport eines Katalysators für die Herstellung von Olefinpolymeren
Stockage et transport d'un catalyseur pour une production de polymères oléfiniques

(43) Date of publication of application: 26.03.2014
(73) Proprietor: Borealis AG, 1220 Vienna (AT)
(72) Inventor: Wykopal, Petra, 1040 Vienna (AT); Mitterer, Alexander, 4020 Linz (AT); Kramer, Jonathan, 4210 Gallneukirchen (AT); Vaarne, Nora, 01150 Söderkulla (FI); Schneider, Horst, 1060 Vienna (AT)
(74) Representative: Lux, Berthold

(56) References cited:
- WO-A1-2006/063771
- DE-B- 1 178 044
- FR-A- 1 157 001
- FR-A- 1 198 743
- GB-A- 1 253 250
- US-A- 3 062 507
- US-A1- 2008 268 279
- US-A1- 2010 092 348

## Description

### FIELD OF THE INVENTION

The present invention relates to a pressure drum for storing and transporting a component used as catalyst for a production of olefin polymers. Moreover, the present invention relates to the process of filling a pressure drum with a catalyst and to a process for draining or emptying a pressure drum of catalyst. Furthermore, the present invention relates to the use of a pressure drum for filling, storing, transporting and draining components used as catalysts for a production of olefin polymers.

### BACKGROUND OF THE INVENTION

Polymers may be formed during a polymerization process in which a catalyst slurry consisting from e.g. an oil and catalyst component is used. The slurry may be maintained in a catalyst feed vessel in a homogeneous state and may be continuously withdrawn from the catalyst feed vessel and introduced into a polymerization reactor. Subsequently, an olefin monomer may be continuously introduced into the polymerization reactor. The polymerization reactor is operated in such a way that the olefin monomer is polymerized. Subsequently the polymerized olefin is withdrawn from the polymerization reactor. Such a process for polymerizing olefins in the presence of an olefin polymerization catalyst is known for example from WO 2006/063771 A1. US-A-3 062 507 discloses a pressure vessel having two spherical heads.

Before the polymerization process the catalyst is filled into barrels or drums for storage and transportation. A first kind of known barrels may be low stress barrels. These barrels may hold a risk for the operators when manipulating the barrels during a filling and an emptying or draining process. Furthermore, the flange joints of such barrels may be not gastight enough to hold gases. Furthermore, they may not be homologated for gases and may not fulfill Health Safety and Environment (HSE) requirements. Moreover, such low stress barrels may require laborious manual lifting to a process area of a polymerization catalyst feed vessel and manual emptying of the barrel by gravity into the polymerization process.

A second kind of known barrels may be homologated for liquids and gases. However, these barrels have a significantly higher weight than the low stress barrels. Moreover, these barrels have significantly greater dimensions and wall thicknesses than the low stress barrels. Furthermore, these barrels are also significantly costlier than the low stress barrels. Due to the high cost the second kind of barrels requires multiple uses. I.e. a washing station, a painting station and a tracking system for the barrels is required when used in a process for polymerizing olefins.

### SUMMARY OF THE INVENTION

There may be a need to provide a possibility for enhancing the security of operators during the filling, storing, transportation and draining of a catalyst and also for increasing the reproducibility of the catalyst draining and handling in polyolefin processes.

This need may be covered by the subject-matter of the independent claims. Further exemplary embodiments are evident from the dependent claims and the following description.

According to a first aspect of the present invention, a pressure drum for storing and transporting a catalyst for a production of olefin polymers is presented according to claim 1.

The first torispherical head is arranged at the first end of the cylindrical body and the second torispherical head is arranged at the second end of the cylindrical body. Therein, the first torispherical head and the second torispherical head are connected to the cylindrical body by full penetration welding in such a way that the pressure drum is adapted for withstanding pressures between -0,5 and 9 bar gauge (bar g) . In other words, the idea of the present invention according to the first aspect is based on providing a drum which is designed in such a way that it may accommodate a catalyst under a certain pressure, preferably a pressure of 2 to 4 bar g, more preferably 3 bar g, during storage and transportation. Therein, the use of a full penetration welding and relatively thin walls of the drum allow to use a partially automated pressure transfer system for filling, transporting, storing and emptying the drum while maintaining a high safety level and keeping the costs balanced. Due to the relatively balanced costs, the pressure drum may be used as a one time use drum or as a reusable drum which is flushed or washed after use. As the pressure demand for storing a catalyst for a production of olefin polymers may be about 3 bar g, walls thinner than in the known barrels may be used in combination with the full penetration welding for providing enough pressure resistance. Due to the use of thinner walls also the weight of the pressure drum is reduced.

The pressure drum, also denoted as pressure barrel, may be used for storing and transporting a catalyst which for example may be a solid catalyst component, a fluid catalyst or a suspension of solid catalyst components for example in oil or wax.

The pressure drum may be adapted for any kind of catalyst. For example, the catalyst may be a chromium catalyst, a Ziegler-Natta catalyst, a single-site catalyst or any mixture thereof. The catalyst is preferably supported or self-supported as described for instance in WO 03/000754. Typical support materials are organic or inorganic support materials, like silica, MgCl₂ or porous polymeric material. Furthermore, the catalyst may have been prepolymerized in the catalyst polymerization reactor. Moreover, the oil in which the catalyst may be suspended may be the same oil used in the catalyst feed vessel of the polymerization process. For example, the concentration of a solid catalyst component in the catalyst stored and transported in the pressure drum may be up to 450 kg/m³ of the fluid medium.

The oil which may be contained in the catalyst stored and transported in the pressure drums may be inert towards the catalyst. For example, the oil may be a hydrocarbon oil or a silicon oil with a dynamic viscosity from 20 - 3000 mPa.s at the operating temperature of the catalyst feed drum.

Furthermore, the catalyst may comprise a drag reducing agent for avoiding sedimentation of the catalyst during storage and transportation. The drag reducing agent is chosen in such a way that no negative effect on the viscosity of the oil is detectable.

The pressure drum comprises a cylindrical body, i.e. a cylindrical shell or a tubular shaped body, with a first end and a second end. When the pressure drum is stored or transported a longitudinal axis of the cylindrical body may be orientated perpendicular to the floor or to a pallet on which the pressure drum is stored. In this case the first end may be positioned above the second end, i.e. the drum may be standing on the bottom border.

Moreover, the pressure drum comprises a first torispherical head which is arranged at the first end of the cylindrical body and a second torispherical head which is arranged at the second end of the cylindrical body. The upper head (top) is equipped with nozzles for filling and unloading as well as a pressure gauge and a nitrogen nozzle. The bottom head is without nozzles and may be marked with an ADR-code.

The connection between the torispherical heads and the cylindrical body is achieved by full penetration welding according to welding standards. Therein, the phrase full penetration welding may denote that the full wall thickness of the elements to be welded is molten and the region between the elements to be welded is filled completely with molten material.

The full penetrated welding seams make possible for the pressure drum to withstand pressures from within between -0,5 and 9 bar g. Preferably the pressure drum may withstand pressures from within of 2 to 4 bar g, preferably about 3 bar g. This pressure is higher than possible with conventional barrels of the low stress type. Furthermore, as the transportation and the storage of the catalyst require pressures which are smaller than in other applications the walls of the pressure drum may be designed thinner than in the second kind of known pressure drums. In this way, weight may be reduced and costs optimized.

As the pressure drum according to the invention may withstand pressures between - 0,5 bar g and 9 bar g, pressure may be applied to the drum during filling and during emptying or draining of the catalyst. In this way, the filling and also the draining process may be sped up. Moreover, the security during storage and transportation of the catalyst may be enhanced with the pressure drum according to the invention because it allows to apply an inert gas under pressure to the catalyst inside the pressure drum. The pressure drum comprises a first coupling element which is adapted for allowing a flow to and from the pressure drum. Furthermore, the pressure drum comprises a second coupling element which is adapted for allowing a flow of an inert gas or oil into the pressure drum. Moreover, the pressure drum comprises a third coupling element which is adapted for allowing a flow of the catalyst into the pressure drum. Furthermore, the pressure drum comprises a fourth coupling element which is adapted for allowing an outflow of the catalyst from the pressure drum. All of the coupling elements are integrated into the first torispherical head. A pressure measurement element is provided at the first coupling element. Therein, the pressure measurement element may be a manometer.

The coupling elements may for example comprise ports and valves. Furthermore, the coupling elements may comprise further functionalities. For example, the third coupling element may be further adapted for allowing an outflow of the catalyst from the pressure drum. Moreover, for example the fourth coupling element may be also adapted for allowing an inflow of an inert gas or of oil for enhancing the draining of the catalyst from the pressure drum when the pressure drum is turned upside down. Due to the integration of several coupling elements into the first torispherical head of the pressure drum, a fully automated filling and draining of the pressure drum is possible. Therein, automated or automatically may denote that during this process no interaction with an operator is necessary.
Moreover, the security during manipulation of the drums by an operator is enhanced. For example, the security is enhanced during the process of connecting hoses and tubes to the pressure drum for allowing a communication with reservoirs of catalyst and inert gas.

According to a further exemplary embodiment of the present invention, at least one of the first coupling element, the second coupling element, the third coupling element and the fourth coupling element comprises a locking element with a first security level and a second security level.

In other words, one or each of the coupling elements may comprise a nozzle which may be blocked twice, i.e. double blocked with a valve and a blind coupling. Furthermore, the coupling elements may comprise further security levels. For example, at least one of the coupling elements may comprise a cam-lock male part and a cam-lock female part which may correspond to a first security level. Furthermore, the same coupling element may comprise a cam-lock cap sealed by a wire. Due to the double security, i.e. due to the two security levels a higher security may be provided when manipulating the pressure drum during filling, storage, transportation and draining. A further security level may be provided by a valve included in each of the coupling elements.

According to a further exemplary embodiment of the present invention, at least one of the first coupling element, the second coupling element, the third coupling element and the fourth coupling element comprises a valve, particularly a disc valve. A disc valve may be integrated into one or into each of the nozzles of the coupling elements. The disc valve may comprise a movable element inside a stationary body. The disc valve may adjustably restrict the flow cross-section through the respective coupling element. The disc valve may for example move linearly or rotate on a stem, i.e. be designed as a butterfly valve. Moreover, the valve may be designed as a check valve and rotate on a hinge. Alternatively, the valve may be designed as a ball valve in which the ball may comprise a cylindrical hole which provides a fluid passage.

The integration of a disc valve into the coupling elements enables metering or portioning of the catalyst during filling and draining of the pressure drum. A disc valve may allow for a particularly exact metering of the catalyst and also of an inert gas. Furthermore, a disc valve may enhance the security when using the pressure drum because the valve may be closed for example in addition to a cam-lock.

According to a further exemplary embodiment of the present invention, the pressure drum further comprises a dip tube adapted for guiding the catalyst in the direction from the second torispherical head to the first torispherical head and out of the pressure drum. Moreover, the pressure drum comprises a dip tube holding element arranged at the second torispherical head. The dip tube is connected to the dip tube holding element in such a way that the dip tube encloses an angle between 1 and 20° with a longitudinal axis of the cylindrical body of the pressure drum.

In other words, the dip tube is adapted to guide the catalyst from the bottom of the pressure drum to the top and out of the pressure drum e.g. through the fourth coupling. Furthermore, the dip tube is adapted to guide an inert gas into the drum when the drum is emptied upside down as explained in more detail below.

Furthermore, the dip tube is arranged in a slanted fashion within the pressure drum for allowing for a coupling element, particularly the third coupling element, to be placed exactly in the middle of the first torispherical head surface.

Therein, the pressure drum may be emptied in two different ways. According to one embodiment of the invention the drum may be emptied standing upside down, i.e. with the second torispherical head up and the first torispherical head down. In this case, the pressure drum may be emptied by gravity. Therefore, it may be advantageous for the third coupling element to be arranged in the middle, i.e. at the lowest point, of the first torispherical head.

According to a further embodiment the catalyst may be emptied from the pressure drum while it is standing with the first torispherical head up and the second torispherical head down. In this case, the emptying process may be conducted as follows: The fourth coupling element to which the dip tube is connected may be connected to the catalyst feed vessel by corresponding lines. Furthermore, a valve for example a disc valve at the fourth coupling element is opened. Due to the overpressure within the pressure drum the catalyst ascends from the bottom of the pressure drum through the dip tube to the catalyst feed vessel of a polymerization reactor. Moreover, for example through the second coupling element or through the third coupling element additional inert gas such as nitrogen may be added to increase the pressure within the pressure drum. The cylindrical body, the first torispherical head and the second torispherical head are made of stainless steel. Preferably a stainless steel e.g. a AISI 304 (1.4301) or a AISI 316L (1.4404) steel is used. The cylindrical body, the first torispherical head and the second torispherical head comprise a nominal wall thickness between 1,5 to 3 mm. Preferably, the wall thickness of the elements of the pressure drum is 2 mm. In this way, weight of the pressure drum may be reduced compared to conventional drums and thus, costs may be optimized.
According to a further exemplary embodiment of the present invention, the pressure drum further comprises a first cylindrical skirt also denoted as border,-arranged at the first torispherical head and a second cylindrical skirt arranged at the second torispherical head. Furthermore, the pressure drum comprises a first load securing element and a second load securing element. The first load securing element and the second load securing element are integrated into the first cylindrical skirt. The first load securing element and the second load securing element enclose an angle of about 90° in a plane perpendicular to a longitudinal axis of the cylindrical body.

The cylindrical skirts may be frame elements for providing a steady positioning of the drum at the pallet or at the floor. Therein, the cylindrical skirts may comprise the same diameter as the cylindrical body. Furthermore, the cylindrical skirts may provide protection for the coupling elements during storage. At one end the cylindrical skirts may be connected to the cylindrical body or to the respective torispherical head. At the opposite end the cylindrical skirts may be open or closed. Particularly, the first cylindrical skirt may be open and the second cylindrical skirt may be closed. Therein, the closed second cylindrical skirt may comprise openings, e.g. three openings. The openings may serve as rain water outlets.

The load securing elements may for example be recesses, holes or ears into which restraints or safety belts may be inserted for connecting the pressure drums for example on a pallet to each other and/or to the pallet. The arrangement of the load securing elements in an angle of 90° allows to position and secure for example four pressure drums beside each other in a square arrangement which may be optimal for transportation.

Furthermore, a first transportation element and a second transportation element may be arranged at the first cylindrical skirt. The transportation elements may also be denoted as crane holes. Therein, the transportation elements may be designed as recesses, holes or ears at which a crane may be connected to the pressure drum for lifting and moving the pressure drum. The transportation elements are placed at different locations than the load securing elements. For example, the first transportation element may be arranged in the middle between the first and second load securing elements, i.e. in a distance of 45° to each of the load securing elements.

The second transportation element may be arranged for example at an angle of 180° in relation to the first transportation element in the plane mentioned above.

According to a further exemplary embodiment of the present invention, the diameter of the cylindrical body is equal to or smaller than half of the width of a pallet on which the pressure drum is to be transported. For example, conventional pallets may have a size of 1100 x 1100 mm. Thus, the diameter of the cylindrical body and also of the first and second cylindrical skirts may be less than 550 mm. Particularly, the diameter of the cylindrical body may be in the range between 350mm and 550 mm. In this way, the pressure drum does not overlap the pallet when for example four pressure drums are loaded on the conventional pallet.

According to a further exemplary embodiment of the present invention, the pressure drum comprises a volume between 50 and 250 liters. Particularly, the pressure drum may accommodate 200 liters of fluid. Furthermore, the pressure drum comprises a diameter between 450 and 550 mm and a height of e.g. 710 mm. In case of 50 liter drums the cylindrical body may comprise the same or a smaller diameter and a smaller height of e.g. 200 mm.

According to a second aspect of the present invention, a process for filling a pressure drum with catalyst for production of olefin polymers is presented. The process comprises the following steps: providing a pressure drum as described above; connecting a reservoir of catalyst to the pressure drum for example at the third coupling element; connecting a reservoir of inert gas to the pressure drum for example at the second coupling element; automatically flushing the pressure drum with the inert gas which for example may be nitrogen; automatically filling a predefined amount of catalyst into the pressure drum; and automatically filling a predefined amount of inert gas into the pressure drum. Advantageously, the pressure drum allows for an automatic filling of the pressure drum for example due to the providing of coupling elements and due to the ability of the pressure drum to withstand pressures of about 3 bar g.

According to a third aspect of the present invention, a process for draining or emptying a pressure drum of catalyst for production of olefin polymers is provided. The process comprises the following steps: providing a pressure drum as described above filled with catalyst; opening a third coupling element and/or a fourth coupling element; and automatically draining the catalyst from the pressure drum by introducing an oil or a gas under pressure into the pressure drum. A gas under pressure may be a gas which is introduced with a higher pressure than atmospheric pressure into the drum. The gas may for example be the inert gas used for storing the catalyst. Also the draining process may be advantageously automated after for example manually opening the coupling elements.

According to a fourth aspect of the present invention, a process for manufacturing a polyolefin in the presence of a catalyst is presented. The process comprises inter alia the steps of supplying a catalyst from the pressure drum (1) to a reactor system in which the polymerization takes place. The feeding of the catalyst in the reactor system from the pressure drum (1) can be for instance continuously during the polymerization. Additionally monomers are introduced in the reactor system, like propylene and/or ethylene, and the reactor conditions are chosen that olefin polymerization takes place. The reactor system can comprise one, two or more reactors in series. Preferably the first reactor is a loop reactor whereas the subsequent reactors are preferably gas phase reactors. The polyolefin which is manufactured may for example be a polypropylene and/or a polyethylene.

According to a fifth aspect of the present invention, the use of a pressure drum as described above for filling, storing, transporting and/or draining a catalyst for production of olefin polymers is presented.

According to a further embodiment of the present invention, the dimensions of the pressure drum are designed in such a way that a conventional transportation space, e.g. in a conventionally sized transportation vehicle, may be optimally used. I.e. the dimensions of the pressure drum, for example the diameter of the pressure drum, may be optimized to fit into conventional transportation means such as transportation trucks and particularly into the reefer of the transportation vehicles.

According to a further exemplary embodiment of the present invention, the dimensions of the pressure drum are designed in such a way that a space on a conventional pallet may be optimally used. For example, the diameter of the pressure drum may be designed in such a way that four pressure drums fit optimally without an overlap on a conventional pallet.

It has to be noted that embodiments of the invention are described with reference to different subject-matters. In particular, some embodiments are described with reference to process-type claims or use claims whereas other embodiments are described with reference to device claims. However, a person skilled in the art will gather from the above and the following description that, unless otherwise notified, in addition to any combination of features belonging to one type of subject-matter also any combination between features relating to different subject-matters is considered to be disclosed with this application. However, all features can be combined providing synergetic effects that are more than the simple summation of the features.

### BRIEF DESCRIPTION OF THE DRAWINGS

Exemplary embodiments of the invention will be described in the following with reference to the following drawings.
- Fig 1: shows schematically a cross section of a pressure drum according to an exemplary embodiment of the invention
- Fig. 2: shows schematically a perspective view of the upper part of the pressure drum according to an exemplary embodiment of the invention
- Fig. 3: shows schematically a top view of four pressure drums arranged on a pallet according to an exemplary embodiment of the invention
- Fig. 4: shows schematically a flow diagram of the process of filling a pressure drum according to an exemplary embodiment of the invention
- Fig. 5: shows schematically a flow diagram of the process of draining a pressure drum according to a first exemplary embodiment of the invention
- Fig. 6: shows schematically a flow diagram of the process of draining a pressure drum according to a second exemplary embodiment of the invention

### DETAILED DESCRIPTION OF EMBODIMENTS

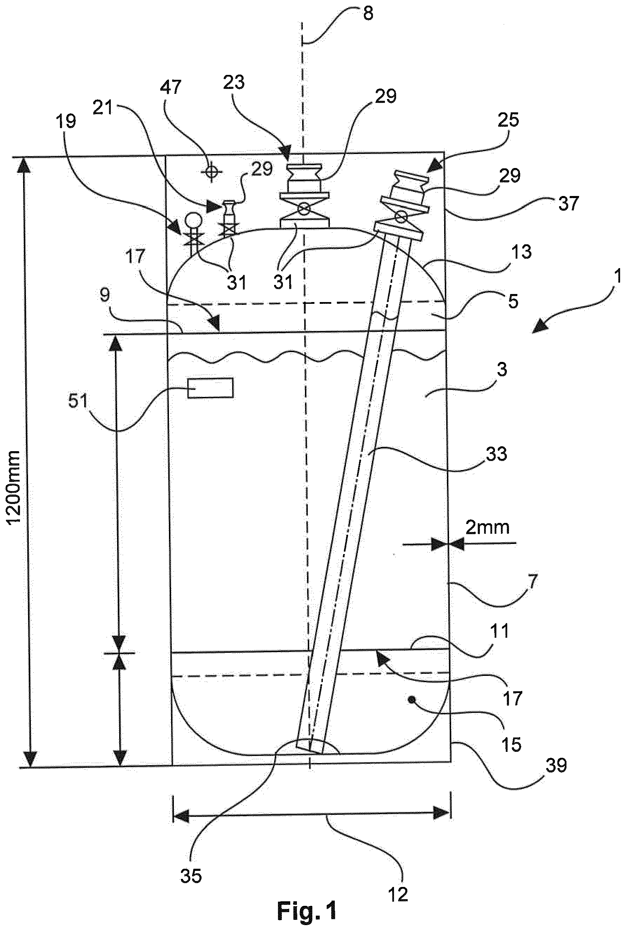

In Fig. 1 to 3, different embodiments of a pressure drum 1 are shown. In Fig. 1, a cross-sectional view through a pressure drum 1 is shown. The pressure drum is filled with a catalyst 3 which is used in a process for producing olefin polymers. Furthermore, an inert gas 5 such as nitrogen is filled into the pressure drum 1. The fluids are filled into the pressure drum 1 at a pressure of approximately 3 bar g. The pressure drum may comprise a volume of 200 liters with an outer diameter of maximally 550 mm. Preferably, the outer diameter of the pressure drum 1 is approximately 500 mm. The height of the pressure drum 1 may correspond to approximately 1200 mm. The drum may comprise a metal particularly stainless steel of for example AISI 304 or AISI 316L. The pressure drum may be adapted to securely store and transport the catalyst under temperatures between - 30°C and 220°C and in particular between -25°C and 60°C.

The pressure drum 1 comprises a cylindrical body 7 with a first end 9 and a second end 11. Furthermore, the pressure drum 1 comprises a first torispherical head 13 and a second torispherical head 15. The walls of the cylindrical body 7 and of the torispherical heads 13, 15 may have a width of approximately 2 mm. The torispherical heads 13, 15 are connected to the cylindrical body 7 by full penetration welding seams 17. The quality of the welding seams 17 may correspond to certain official requirements such as PED (pressure equipment directive) and AD-2000. Furthermore, the pressure drum 1 may fulfill further official requirement such as ADR, RID and IMDG.

A type label 51, also denoted as type plate, may be arranged at one side of the pressure drum 1. Particularly, the type label 51 may be glued or tagged to the cylindrical body 7.

Moreover, a first coupling element 19, a second coupling element 21, a third coupling element 23 and a fourth coupling element 25 are integrated into the first torispherical head 13. The first coupling element 19 may provide a connection for a pressure measurement element 27 such as a manometer. The second coupling element 21 may provide a connection to a reservoir with an inert gas 5. Therein, the second coupling element 21 may comprise a quick connector and/or a Kamlok.

Furthermore, the second coupling element may be designed as gas-tight and self-locking. The third coupling element may be arranged in the middle of the surface of the first torispherical head 13. Furthermore, the third coupling element may be designed to be connected to a reservoir of catalyst. Therein, the diameter, i.e. the possible maximal cross-section of the flow through the third coupling element 23 may be bigger than that of second coupling element 21. The third coupling element 23 may also comprise a cam-lock. The fourth coupling element 25 may be adapted to allow an outflow of catalyst 3 from the pressure drum 1 and may also comprise a cam-lock.

The coupling elements 19, 21, 23 and 25 may comprise locking elements 29 such as a cam-locks secured by a wire. Furthermore, a valve 31, particularly a disc valve, may be provided at the coupling elements 19, 21, 23, 25. In this way, the coupling elements 19, 21, 23, 25 are secured twice and may not be opened accidentally.

Furthermore, the fourth coupling element 25 is connected to a dip tube 33 which is connected at two dip tube holding elements 35 at the second torispherical head 15. The dip tube 33 encloses an angle of for example 15° with a longitudinal axis 8 of the cylindrical body 7 of the pressure drum 1. In this way, the main coupling element for filling the pressure drum 1, namely the third coupling element 23 may be positioned in the center, i.e. at the longitudinal axis 8 of the cylindrical body 7.

Furthermore, the pressure drum 1 comprises a first cylindrical skirt 37 and a second cylindrical skirt 39. The first cylindrical skirt 37 may be connected at the first end 9 of the cylindrical body 7. Furthermore, the second cylindrical skirt 39 may be connected at the second end 11 of the cylindrical body 7. The second cylindrical skirt 39 may serve for stable and safe positioning of the pressure drum 1 at a pallet or at a floor. Furthermore, the first cylindrical skirt 37 may enhance the security of the coupling elements 21, 23, 25, 27. The cylindrical skirts 37, 39 maybe open. Alternatively, for example the first cylindrical skirt 37 may comprise a closing cap for protecting the coupling elements 19, 21, 23, 25 from environmental influences such as rain.

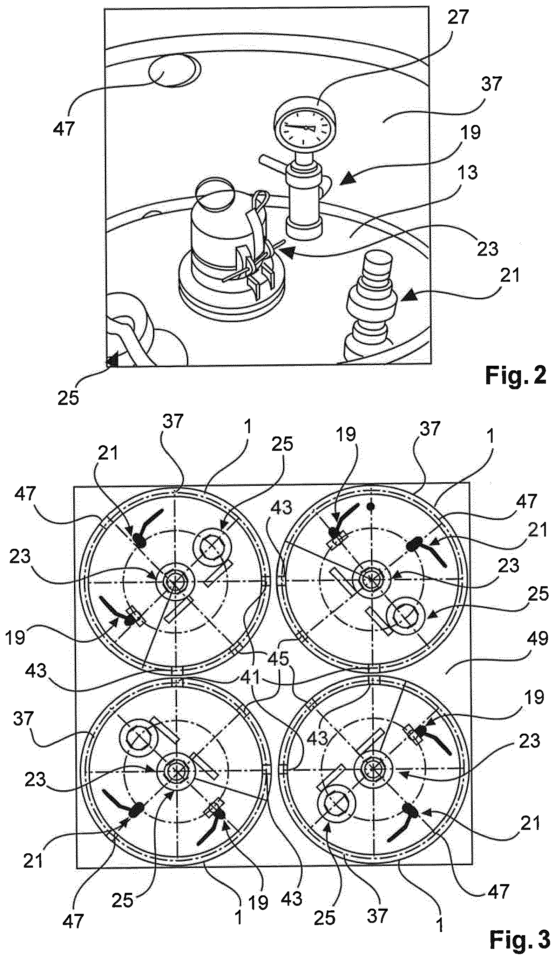

In Fig. 2, a part of a top view of a pressure drum as shown in Fig. 1 is shown. In Fig. 3, a top view of four pressure drums 1 on a pallet 45 is shown.

As may be seen in Fig. 3, the dimensions of the pressure drums 1 are optimized for storage and transportation on conventional pallets 49. Particularly, a pallet 49 may have a width of 1100 mm. Accordingly, the outer diameter 12 of the pressure drum 1 is less than 550 mm such that four pressure drums 1 may be stored on one pallet 49 without any overlap.

For moving and positioning the pressure drums 1, for example on the pallet 49, a first transportation element 45 and a second transportation element 47 are provided at the first cylindrical skirt 37. The transportation elements 45, 47 may be arranged on opposite sides of the first cylindrical skirt 37 and be designed as crane holes.

Moreover, a first load securing element 41 and a second load securing element 43 are provided at the first cylindrical skirt 37. The load securing elements 41, 43 may form an angle of 90° between each other in a plane perpendicular to a longitudinal axis 8 of the cylindrical body 7. In this way, a first load securing element 41 of a first pressure drum 1 may be positioned opposite a second load securing element 43 of a second pressure drum 1 respectively when the four pressure drums 1 are positioned on a pallet 49. Due to this design with load securing elements 41, 43, the pressure drums 1 may be connected to each other by securing belts. Furthermore, the pressure drums 1 may be secured to the pallet 49. The load securing elements 41, 43 may for example be designed as holes, recesses or ears in the first cylindrical skirt 37.

The pressure drums 1 according to the invention may be produced at lower costs as compared to conventional barrels while maintaining a better pressure resistance than low stress type barrels. Furthermore, the design of the pressure drums 1 allows for a safer handling during the whole chain of use of the pressure drum 1.

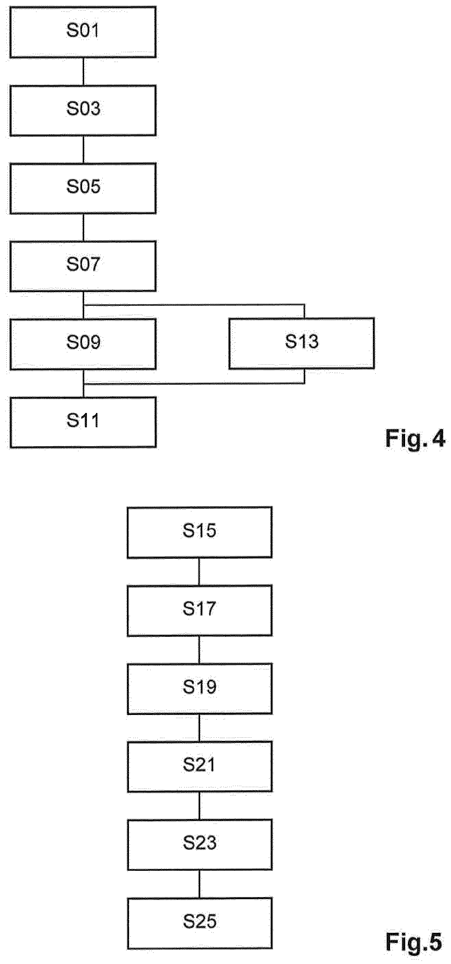

In Fig. 4, a process for filling the pressure drum 1 with catalyst 3 and possibly inert gas 5 is shown in a flow diagram. In step S01, an empty pressure drum 1 is provided. Furthermore, in step S03, a reservoir of inert gas 5 is connected to the pressure drum 1. In step S05, a reservoir of catalyst 3 is connected to the pressure drum 1. In step S07, the pressure drum 1 may be optionally flushed automatically with inert gas 5. Subsequently, a predefined amount of catalyst 3 is automatically filled into the pressure drum 1 in step S09. Moreover, in step S11, a predefined amount of inert gas 5 is automatically filled into the pressure drum 1. In step S13, the pressure within the pressure drum 1 is controlled with the help of the pressure measurement element 27. Step S13 may for example be executed in parallel to steps S09 and S11.

Therein, a different order of steps is possible. For example, the connecting of a reservoir of inert gas 5 to a second coupling element 21 in step S03 and the connecting of reservoir of catalyst 3 e.g. to the third coupling element 23 in step S05 may be executed in parallel or in optional order.

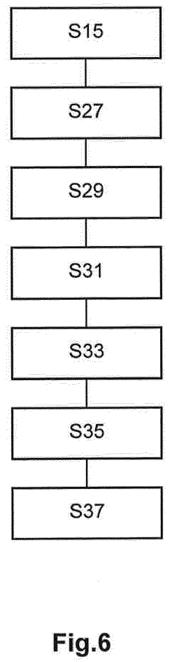

In Figs. 5 and 6, two optional processes for draining the catalyst 3 from the pressure drum 1 are described. Fig. 5 describes the process of emptying the pressure drum 1 while it is standing upright. Fig. 6 describes the process of emptying the pressure drum 1 while it is turned upside down.

In Fig. 5, a pressure drum 1 filled with catalyst 3 is provided in step S15. Furthermore, a fourth coupling element 25 is connected to a catalyst feed vessel in step S17. In step S19, a third coupling element 23 is connected to a reservoir of oil. Step S19 is optional. In step S21, a second coupling element 21 is connected to a reservoir of inert gas 5. Subsequently, the coupling elements 21, 23 and 25 are opened in step S23. Alternatively, only coupling elements 23 and 25 or only the coupling elements 21 and 25 are opened. Furthermore, in step S25, the catalyst 3 is drained automatically from the pressure drum 1 by introducing an oil through the third coupling element 23 and/or by introducing an inert gas 5 under pressure through the second coupling element 21 into the pressure drum 1. Therein, the catalyst 3 is pushed due to the created overpressure through the dip tube 33 out of the pressure drum 1 into the catalyst feed vessel.

Also here, the steps of the process may be executed in different order. For example, the order of the connection of the coupling elements may be different. Furthermore, for example, either step S19 or step S21 may be omitted.

In Fig. 6, an alternative draining process is described. In the beginning, a pressure drum 1 filled with catalyst 3 is provided in step S15. Furthermore, the pressure drum 1 is turned upside down in step S27. This means that after turning the pressure drum 1 upside down, the first torispherical head 13 is positioned below the second torispherical head 15. Furthermore, in step S29, a third coupling element 23 is connected to a catalyst feed vessel. In step S31, a fourth coupling element 25 is connected to a reservoir of oil. Therein, step S31 is optional and may be omitted. In step S33, a second coupling element 21 is connected to a reservoir of inert gas 5. Step S33 is also optional and may be omitted.

The coupling elements 21, 23, 25 in the embodiment of Fig. 6 may be connected to different reservoirs than in the embodiment shown in Fig. 5. In step S35, the coupling elements 21, 23, 25 are opened. Furthermore, in step 37, the catalyst 3 is automatically drained from the pressure drum 1 by gravity flow. Optionally, the gravity flow may be enhanced by introducing an oil through the fourth coupling element 25 and the dip tube 33 and/or by introducing an inert gas 5 through the second coupling element 21 into the pressure drum 1.

The steps of the process shown in Fig. 6 may be executed in different order and may be partially omitted. For example, the order of the connecting of the coupling elements 21, 23, 25 may be different. Furthermore, for example, step S31 and/or step S33 may be omitted.

While the invention has been illustrated and described in detail in the drawings and foregoing description, such illustration and description are to be considered illustrative or exemplary and not restrictive. The invention is not limited to the disclosed embodiments. Other variations to the disclosed embodiments can be understood and effected by those skilled in the art in practicing a claimed invention, from a study of the drawings, the disclosure, and the dependent claims. In the claims, the word "comprising" does not exclude other elements or steps. Any reference signs in the claims should not be construed as limiting the scope.

### LIST OF REFERENCE SIGNS

- 1: pressure drum
- 3: catalyst
- 5: inert gas
- 7: cylindrical body
- 8: longitudinal axis of cylindrical body
- 9: first end of cylindrical body
- 11: second end of cylindrical body
- 12: diameter of cylindrical body
- 13: first torispherical head
- 15: second torispherical head
- 17: welding seam
- 19: first coupling element
- 21: second coupling element
- 23: third coupling element
- 25: fourth coupling element
- 27: pressure measurement element (manometer)
- 29: locking element (camlock, wire)
- 31: valve (disc valve)
- 33: dip tube
- 35: dip tube holding element
- 37: first cylindrical skirt
- 39: second cylindrical skirt
- 41: first load securing element
- 43: second load securing element
- 45: first transportation element
- 47: second transportation element
- 49: pallet
- 51: type label / plate
- S01: providing an empty pressure drum
- S03: connecting a reservoir of inert gas to the pressure drum
- S05: connecting a reservoir of catalyst to the pressure drum
- S07: automatically flushing the pressure drum with the inert gas
- S09: automatically filling a predefined amount of catalyst into the pressure drum
- S11: automatically filling a predefined amount of inert gas into the pressure drum
- S13: controlling the pressure within the pressure drum with the help of the pressure measurement element

- S15: providing a pressure drum filled with catalyst
- S17: connecting a forth coupling element to a catalyst feed vessel
- S19: connecting a third coupling element to a reservoir of oil
- S21: connecting a second coupling to a reservoir of inert gas
- S23: opening the coupling elements
- S25: automatically draining the catalyst from the pressure drum by introducing an oil or an inert gas under pressure into the pressure drum

- S 27: turning the pressure drum upside down
- S29: connecting a third coupling element to a catalyst feed vessel
- S31: connecting a forth coupling element to a reservoir of oil
- S33: connecting a second coupling element to a reservoir of inert gas
- S35: opening the coupling elements
- S37: automatically draining the catalyst from the pressure drum by gravity flow optionally enhanced by introducing an oil or an inert gas under pressure into the pressure drum

## Claims

1. Pressure drum (1) for filling, storing, transporting and discharging a catalyst (3) for a production of olefin polymers, the pressure drum (1) comprising a cylindrical body (7) with a first end (9) and a second end (11);
a first torispherical head (13);
a second torispherical head (15);
a first coupling element (19) which is adapted for allowing a flow to and from the pressure drum (1);
a second coupling element (21) which is adapted for allowing a flow of an inert gas (5) into the pressure drum (1);
a third coupling element (23) which is adapted for allowing a flow of the catalyst (3) into the pressure drum (1);
a forth coupling element (25) which is adapted for allowing an outflow of the catalyst (3) from the pressure drum (1);
wherein the first coupling element (19), the second coupling element (21), the third coupling element (23) and the fourth coupling element (25) are integrated into the first torispherical head (13);
a pressure measurement element (27) provided at the first coupling element (19);
wherein the first torispherical head (13) is arranged at the first end (9) of the cylindrical body (7) and the second torispherical head (15) is arranged at the second end (11) of the cylindrical body (7);
wherein the first torispherical head (13) and the second torispherical head (15) are connected to the cylindrical body (7) by full penetration welding (17) in such a way that the pressure drum (1) is adapted for withstanding pressures between -0,5 and 9 bar g, and
wherein the cylindrical body (7), the first torispherical head (13) and the second torispherical head (15) are made of stainless steel, and comprise a wall thickness of 1,5 to 3 mm.

2. Pressure drum (1) according to claim 1,
wherein at least one of the first coupling element (19), the second coupling element (21), the third coupling element (23) and the fourth coupling element (25) comprises a locking element (29) with a first security level and a second security level.

3. Pressure drum (1) according to claim 1 and 2,
wherein at least one of the first coupling element (19), the second coupling element (21), the third coupling element (23) and the fourth coupling element (25) comprises a valve (31).

4. Pressure drum (1) according to any one of claims 1 to 3, further comprising a dip tube (33) adapted for guiding the catalyst (3) from the second torispherical head (15) to the first torispherical head (13); and
a dip tube holding element (35) arranged at the second torispherical head (15);
wherein the dip tube (33) is connected to the dip tube holding element (35) in such a way that the dip tube (33) encloses an angle between 1° and 20° with a longitudinal axis (8) of the cylindrical body (7) of the pressure drum (1).

5. Pressure drum (1) according to any one of claims 1 to 4, further comprising a first cylindrical skirt (37) arranged at the first torispherical head (13);
a second cylindrical skirt (39) arranged at the second torispherical head (15); a first load securing element (41); and
a second load securing element (43);
wherein the first load securing element (41) and the second load securing element (43) are integrated into the first cylindrical skirt (37);
wherein the first load securing element (41) and the second load securing element (43) enclose an angle of 90° in a plane perpendicular to a longitudinal axis (8) of the cylindrical body (7).

6. Pressure drum (1) according to any one of claims 1 to 5,
wherein the diameter of the cylindrical body (7) is equal to or smaller than half of the width of a pallet (49) on which the pressure drum (1) is transported.

7. Pressure drum (1) according to any one of claims 1 to 6,
wherein the pressure drum (1) comprises a volume between 50 and 250 liters; wherein the pressure drum (1) comprises a diameter (12) between 450 and 550 mm.

8. Process for filling a pressure drum (1) with catalyst (3) for production of olefin polymers, the process comprising the following steps providing a pressure drum (1) according to any one of claims 1 to 7; connecting a reservoir of catalyst (3) to the pressure drum (1); connecting a reservoir of inert gas (5) to the pressure drum (1); automatically flushing the pressure drum (1) with the inert gas (5); automatically filling a predefined amount of catalyst (3) into the pressure drum (1);
automatically filling a predefined amount of inert gas (5) into the pressure drum (1).

9. Process for draining a pressure drum (1) of catalyst (3) for production of olefin polymers, the process comprising the following steps providing a pressure drum (1) according to any one of claims 1 to 7 filled with catalyst (3);
opening a third coupling element (23) and/or a fourth coupling element (25); automatically draining the catalyst (3) from the pressure drum (1) by introducing an oil or the inert gas (5) under pressure into the pressure drum (1).

10. Process for manufacturing a polyolefin in the presence of a catalyst (3),
wherein said catalyst (3) is supplied from a pressure drum (1) according from any one of claims 1 to 7 to a reactor system in which the polymerization takes place.

11. Use of a pressure drum (1) according to any one of claims 1 to 7, for filling, storing, transporting and/or draining a catalyst (3) for a production of olefin polymers.

12. Use of a pressure drum (1) according to claim 11,
wherein the dimensions of the pressure drum (1) are designed in such a way that a transportation space may be optimally used.

13. Use of a pressure drum (1) according to claim 11 and 12,
wherein the dimensions of the pressure drum (1) are designed in such a way that a space on a pallet may be optimally used.

## Patentansprüche

1. Drucktrommel (1) zum Füllen, Lagern, Transportieren und Entleeren eines Katalysators (3) zur Herstellung von Olefin-Polymeren, wobei die Drucktrommel (1)
einen zylindrischen Körper (7) mit einem ersten Ende (9) und einem zweiten Ende (11);
einen ersten torisphärischen Kopf (13);
einen zweiten torisphärischen Kopf (15);
ein erstes Kupplungselement (19), das dafür ausgelegt ist, einen Fluss zu und von der Drucktrommel (1) zu ermöglichen;
ein zweites Kupplungselement (21), das dafür ausgelegt ist, einen Fluss eines Inertgases (5) in die Drucktrommel (1) zu ermöglichen;
ein drittes Kupplungselement (23), das dafür ausgelegt ist, einen Fluss des Katalysators (3) in die Drucktrommel (1) zu ermöglichen;
ein viertes Kupplungselement (25), das dafür ausgelegt ist, einen Abfluss des Katalysators (3) aus der Drucktrommel (1) zu ermöglichen;
wobei das erste Kupplungselement (19), das zweite Kupplungselement (21), das dritte Kupplungselement (23) und das vierte Kupplungselement (25) in den ersten torisphärischen Kopf (13) integriert sind;
ein Druckmesselement (27), das an dem ersten Kupplungselement (19) vorgesehen ist;
wobei der erste torisphärische Kopf (13) am ersten Ende (9) des zylindrischen Körpers (7) angeordnet ist und der zweite torisphärische Kopf (15) am zweiten Ende (11) des zylindrischen Körpers (7) angeordnet ist;
wobei der erste torisphärische Kopf (13) und der zweite torisphärische Kopf (15) mit dem zylindrischen Körper (7) durch Vollpenetrationsschweißen (17) derart verbunden sind, dass die Drucktrommel (1) dem Widerstehen von Drücken zwischen -0,5 und 9 bar g ausgelegt ist, und
wobei der zylindrische Körper (7), der erste torisphärische Kopf (13) und der zweite torisphärische Kopf (15) aus Edelstahl bestehen und eine Wanddicke von 1,5 bis 3 mm umfassen, umfasst.

2. Drucktrommel (1) nach Anspruch 1,
wobei mindestens eines von dem ersten Kupplungselement (19), dem zweiten Kupplungselement (21), dem dritten Kupplungselement (23) und dem vierten Kupplungselement (25) ein Verriegelungselement (29) mit einer ersten Sicherheitsstufe und einer zweiten Sicherheitsstufe umfasst.

3. Drucktrommel (1) nach Anspruch 1 und 2,
wobei mindestens eines von dem ersten Kupplungselement (19), dem zweiten Kupplungselement (21), dem dritten Kupplungselement (23) und dem vierten Kupplungselement (25) ein Ventil (31) umfasst.

4. Drucktrommel (1) nach einem der Ansprüche 1 bis 3, weiter umfassend
ein Tauchrohr (33), das zum Führen des Katalysators (3) vom zweiten torisphärischen Kopf (15) zum ersten torisphärischen Kopf (13) ausgelegt ist; und
ein am zweiten torisphärischen Kopf (15) angeordnetes Tauchrohrhalteelement (35);
wobei das Tauchrohr (33) so mit dem Tauchrohrhalteelement (35) verbunden ist, dass das Tauchrohr (33) einen Winkel zwischen 1° und 20° mit einer Längsachse (8) des zylindrischen Körpers (7) der Drucktrommel (1) einschließt.

5. Drucktrommel (1) nach einem der Ansprüche 1 bis 4, weiter umfassend
einen ersten zylindrischen Mantel (37), der an dem ersten torisphärischen Kopf (13) angeordnet ist;
einen zweiten zylindrischen Mantel (39), der an dem zweiten torisphärischen Kopf (15) angeordnet ist;
ein erstes Ladungssicherungselement (41); und
ein zweites Ladungssicherungselement (43);
wobei das erste Ladungssicherungselement (41) und das zweite Ladungssicherungselement (43) in den ersten zylindrischen Mantel (37) integriert sind;
wobei das erste Ladungssicherungselement (41) und das zweite Ladungssicherungselement (43) einen Winkel von 90° in einer Ebene senkrecht zu einer Längsachse (8) des zylindrischen Körpers (7) einschließen.

6. Drucktrommel (1) nach einem der Ansprüche 1 bis 5,
wobei der Durchmesser des zylindrischen Körpers (7) gleich oder kleiner als die Hälfte der Breite einer Palette (49) ist, auf der die Drucktrommel (1) transportiert wird.

7. Drucktrommel (1) nach einem der Ansprüche 1 bis 6,
wobei die Drucktrommel (1) ein Volumen zwischen 50 und 250 Litern umfasst;
wobei die Drucktrommel (1) einen Durchmesser (12) zwischen 450 und 550 mm umfasst.

8. Verfahren zum Füllen einer Drucktrommel (1) mit Katalysator (3) zur Herstellung von Olefin-Polymeren, wobei das Verfahren die nachstehenden Schritte umfasst Bereitstellen einer Drucktrommel (1) nach einem der Ansprüche 1 bis 7;
Verbinden eines Behälters für Katalysator (3) mit der Drucktrommel (1);
Verbinden eines Behälters für Inertgas (5) mit der Drucktrommel (1);
automatisches Spülen der Drucktrommel (1) mit dem Inertgas (5) ;
automatisches Füllen einer vordefinierten Menge Katalysator (3) in die Drucktrommel (1);
automatisches Füllen einer vordefinierten Menge Inertgas (5) in die Drucktrommel (1).

9. Verfahren zum Entleeren einer Drucktrommel (1) von Katalysator (3) zur Herstellung von Olefin-Polymeren, wobei das Verfahren die nachstehenden Schritte umfasst Bereitstellen einer Drucktrommel (1) nach einem der Ansprüche 1 bis 7, die mit Katalysator (3) gefüllt ist; Öffnen eines dritten Kupplungselements (23) und/oder eines vierten Kupplungselements (25);
automatisches Entleeren des Katalysators (3) aus der Drucktrommel (1) durch Einleiten eines Öls oder des Inertgases (5) unter Druck in die Drucktrommel (1).

10. Verfahren zur Herstellung eines Polyolefins in Gegenwart eines Katalysators (3),
wobei der Katalysator (3) von einer Drucktrommel (1) nach einem der Ansprüche 1 bis 7 einem Reaktorsystem zugeführt wird, in dem die Polymerisation stattfindet.

11. Verwendung einer Drucktrommel (1) nach einem der Ansprüche 1 bis 7 zum Füllen, Lagern, Transportieren und/oder Entleeren eines Katalysators (3) für die Herstellung von Olefin-Polymeren.

12. Verwendung einer Drucktrommel (1) nach Anspruch 11,
wobei die Abmessungen der Drucktrommel (1) so ausgelegt sind, dass ein Transportraum optimal genutzt werden kann.

13. Verwendung einer Drucktrommel (1) nach Anspruch 11 und 12,
wobei die Abmessungen der Drucktrommel (1) so ausgelegt sind, dass ein Raum auf einer Palette optimal genutzt werden kann.

## Revendications

1. Fût à pression (1) pour recevoir, stocker, transporter et décharger un catalyseur (3) en vue de la production de polymères oléfiniques, le fût à pression (1) comprenant
un corps cylindrique (7) avec une première extrémité (9) et une seconde extrémité (11) ;
un premier fond torisphérique (13) ;
un second fond torisphérique (15) ;
un premier élément de raccordement (19) qui est apte à permettre l'écoulement dans et à partir du fût de pression (1) ;
un deuxième élément de raccordement (21) qui est apte à permettre l'écoulement d'un gaz inerte (5) dans le fût à pression (1) ;
un troisième élément de raccordement (23) qui est apte à permettre l'écoulement d'un catalyseur (3) dans le fût à pression (1) ;
un quatrième élément de raccordement (25) qui est apte à permettre l'écoulement du catalyseur (3) hors du fût à pression (1) ;
le premier élément de raccordement (19), le deuxième élément de raccordement (21), le troisième élément de raccordement (23) et le quatrième élément de raccordement (25) étant intégrés dans le premier fond torisphérique (13) ;
un élément de mesure de pression (27) qui est prévu au niveau du premier élément de raccordement (19) ;
le premier fond torisphérique (13) étant disposé à la première extrémité (9) du corps cylindrique (7), et le second fond torisphérique (15) étant disposé à la seconde extrémité (11) du corps cylindrique (7) ;
le premier fond torisphérique (13) et le second fond torisphérique (15) étant reliés au corps cylindrique (7) par une soudure à pénétration totale (17) de telle sorte que le fût à pression (1) soit apte à résister à des pressions situées entre -0,5 et 9 bar g, et
le corps cylindrique (7), le premier fond torisphérique (13) et le second fond torisphérique (15) étant en acier inoxydable et ayant une épaisseur de paroi de 1,5 à 3 mm.

2. Fût à pression (1) selon la revendication 1, dans lequel le premier élément de raccordement (19) et/ou le deuxième élément de raccordement (21) et/ou le troisième élément de raccordement (23) et/ou le quatrième élément de raccordement (25) comportent un élément de verrouillage (29) avec un premier niveau de sécurité et un second niveau de sécurité.

3. Fût à pression (1) selon les revendications 1 et 2, dans lequel le premier élément de raccordement (19), le deuxième élément de raccordement (21), le troisième élément de raccordement (23) et le quatrième élément de raccordement (25) comportent une soupape (31).

4. Fût à pression (1) selon l'une quelconque des revendications 1 à 3, comprenant également un tube plongeur (33) apte à guider le catalyseur (3) du second fond torisphérique (15) jusqu'au premier fond torisphérique (13) ; et
un élément porte-tube plongeur (35) disposé au niveau du second fond torisphérique (15) ;
le tube plongeur (33) étant relié à l'élément porte-tube plongeur (35) de manière à définir un angle situé entre 1° et 20° avec un axe longitudinal (8) du corps cylindrique (7) du fût à pression (1).

5. Fût à pression (1) selon l'une quelconque des revendications 1 à 4, comprenant également
une première jupe cylindrique (37) disposée au niveau du premier fond torisphérique (13) ;
une seconde jupe cylindrique (39) disposée au niveau du second fond torisphérique (15) ;
un premier élément de fixation de charge (41) ; et
un second élément de fixation de charge (43) ;
le premier élément de fixation de charge (41) et le second élément de fixation de charge (43) étant intégrés dans la première jupe cylindrique (37) ;
le premier élément de fixation de charge (41) et le second élément de fixation de charge (43) définissant un angle de 90° dans un plan perpendiculaire à un axe longitudinal (8) du corps cylindrique (7).

6. Fût à pression (1) selon l'une quelconque des revendications 1 à 5, dans lequel le diamètre du corps cylindrique (7) est égal ou inférieur à la moitié de la largeur d'une palette (49) sur laquelle le fût à pression (1) est transporté.

7. Fût à pression (1) selon l'une quelconque des revendications 1 à 6, le fût à pression (1) ayant un volume situé entre 50 et 250 litres ;
le fût à pression (1) ayant un diamètre (12) situé entre 450 et 550 mm.

8. Procédé pour remplir un fût à pression (1) avec un catalyseur (3) en vue de la production de polymères oléfiniques, le procédé comprenant les étapes qui consistent à :
prévoir un fût à pression selon l'une quelconque des revendications 1 à 7 ;
relier un réservoir de catalyseur (3) au fût à pression (1) ;
relier un réservoir de gaz inerte (5) au fût à pression (1) ;
rincer automatiquement le fût à pression (1) avec le gaz inerte (5) ;
verser automatiquement une quantité prédéfinie de catalyseur (3) dans le fût à pression (1) ;
verser automatiquement une quantité prédéfinie de gaz inerte (5) dans le fût à pression (1).

9. Procédé pour purger un fût à pression (1) du catalyseur (3) pour la production de polymères oléfiniques, le procédé comprenant les étapes suivantes qui consistent à :
prévoir un fût à pression (1) selon l'une quelconque des revendications 1 à 7 rempli de catalyseur (3) ;
ouvrir un troisième élément de raccordement (23) et/ou un quatrième élément de raccordement (25) ;
évacuer automatiquement le catalyseur (3) du fût à pression (1) en introduisant dans ce dernier une huile ou le gaz inerte (5) sous pression.

10. Procédé pour fabriquer une polyoléfine en présence d'un catalyseur (3), selon lequel le catalyseur (3) est amené, à partir d'un fût à pression (1) selon l'une quelconque des revendications 1 à 7, dans un système à réacteur dans lequel la polymérisation a lieu.

11. Utilisation d'un fût à pression (1) selon l'une quelconque des revendications 1 à 7, pour recevoir, stocker, transporter et/ou évacuer un catalyseur (3) en vue de la production de polymères oléfiniques.

12. Utilisation d'un fût à pression (1) selon la revendication 11, selon laquelle les dimensions du fût à pression (1) sont calculées de telle sorte qu'un espace de transport puisse être utilisé de manière optimale.

13. Utilisation d'un fût à pression (1) selon les revendications 11 et 12, selon laquelle les dimensions du fût à pression (1) sont calculées de telle sorte qu'un espace sur une palette puisse être utilisé de manière optimale.
